(19) Europäisches Patentamt
European Patent Office
Office européen des brevets

(11) **EP 4 253 994 A1**

(12) **EUROPEAN PATENT APPLICATION**

(43) Date of publication:
**04.10.2023 Bulletin 2023/40**

(21) Application number: **22165067.4**

(22) Date of filing: **29.03.2022**

(51) International Patent Classification (IPC):
*G01S 7/40* (2006.01)    *G01S 13/44* (2006.01)
*G01S 13/72* (2006.01)    *G01S 13/931* (2020.01)
*G01S 15/931* (2020.01)   *G01S 15/66* (2006.01)
*G01S 15/42* (2006.01)    *G01S 17/66* (2006.01)
*G01S 17/931* (2020.01)   *G01S 17/42* (2006.01)
*G01S 7/497* (2006.01)    *G01S 7/52* (2006.01)
*G01S 13/34* (2006.01)    *G01S 13/58* (2006.01)

(52) Cooperative Patent Classification (CPC):
**G01S 7/403; G01S 7/4086; G01S 7/4972;**
**G01S 7/52004; G01S 13/44; G01S 13/72;**
**G01S 13/931; G01S 17/42; G01S 17/66;**
**G01S 17/931;** G01S 13/34; G01S 13/583;
G01S 15/42; G01S 15/931; G01S 2013/9323;

(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Veoneer Sweden AB**
**447 37 Vårgårda (SE)**

(72) Inventors:
• **EISENMANN, Stefan**
**97464 Niederwerrn (DE)**
• **KLOTZBUECHER, Dirk**
**97464 Niederwerrn (DE)**
• **SCHMIED, Julian**
**97464 Niederwerrn (DE)**

(74) Representative: **Westpatent AB**
**Almekärrsvägen 11**
**443 39 Lerum (SE)**

(54) **SENSOR CALIBRATION BASED ON STRINGS OF DETECTIONS**

(57) The present disclosure relates to a method for calibrating an angle measurement (122) of a vehicle sensor (110) in a vehicle (100) travelling in a movement direction (D). The method comprises obtaining (S100) a sequence of detections (210) associated with a target object (140), and aligning (S200) the detections (210) along a common line (245). The method further comprises estimating (S300) an error angle ($\alpha$) between the common line (245) and the movement direction (D), and calibrating (S400) the angle measurement (122) based on the estimated error angle ($\alpha$).

FIG. 2

(52) Cooperative Patent Classification (CPC): (Cont.)
G01S 2013/9324; G01S 2013/93271;
G01S 2015/937

**Description**

The present disclosure relates to calibration of angle measurements for a vehicle sensor, according to some aspects to a radio detection and ranging (radar) transceivers for use with vehicles.

Modern vehicles often comprise one or more radar transceivers arranged to detect objects in a vicinity of the vehicle. The objects may be stationary objects such as guard rails and traffic islands, or they can be moving objects such as other vehicles.

Radar transceivers are configured to estimate distances between a radar transceiver and detected objects, for instance based on transmission of a frequency modulated continuous wave (FMCW) signal. The relative velocity of the detected object with respect to the radar transceiver can also be determined based on a Doppler shift in received waveforms.

Some radar transceivers are also arranged to estimate a bearing to a detected object in addition to distance and relative velocity. This bearing estimation can be achieved by using array antennas configured to determine relative phases of waveform components received at the different antenna elements in the antenna array. Bearing estimation, i.e., estimating relative angle to a detected object with respect to, e.g., a boresight direction of the radar transceiver is a difficult problem in general. One aspect which makes the problem particularly difficult is that the bearing estimation requires careful calibration of the radar transceiver in order to be accurate. Known algorithms for calibrating a radar transceiver to improve bearing estimation accuracy include methods that use a ratio between relative velocity of a detected stationary object compared to a velocity of the radar transceiver, e.g., a velocity of the vehicle on which the radar transceiver is mounted. The bearing $\vartheta$ can then be estimated or otherwise obtained from the expression

$$\cos\vartheta = \frac{v_D}{v_V}$$

where $v_D$ represents relative velocity obtained from Doppler measurement, and where $v_V$ represents radar transceiver velocity obtained from, e.g., a Global Positioning System (GPS) receiver or from a wheel speed sensor.

A problem with the above approach is that the calibration accuracy strongly depends on vehicle speed accuracy. An error in the determination of $v_V$ of only a few percent can result errors in calibration of bearing of several degrees. Such errors are often not acceptable in safety critical applications such as level 4 (L4) autonomous driving, advanced driver assistance systems (ADAS), and the like.

More accurate methods for calibrating radar transceivers, as well as other types of vehicle sensors such as Lidar (Light Detection and Ranging) sensors, camera sensors, or ultrasonic sensors, in terms of bearing are needed. Such methods should preferably be of limited computational complexity in order to conserve radar transceiver processing resources which are often restricted.

EP 3761054 describes a method for calibrating an angle measurement of a vehicle sensor. The method comprises obtaining a sequence of detections for a stationary target and determining a corresponding sequence of ground truth values associated with the stationary target. The ground truth values are determined based on a minimum detected distance from the vehicle to the stationary target and on a track of the vehicle. A difference between the detections and the ground truth values can be used for calibrating the angle measurement.

According to EP 3761054 there is however a need to determine ground truth values based on a minimum detected distance from the vehicle to the stationary target and on a track of the vehicle, and this is often when the vehicle passes the target, i.e. at a detection angle of about 90°. Finding the minimum detected distance may pose a problem, since a forward-looking vehicle sensor for example can have a field of view that does not allow such detections, for example a field of view of 140° when a field of view that exceeds 180° is required for a forward-looking vehicle sensor.

It is an object of the present disclosure to provide a method for calibrating an angle measurement of a vehicle sensor in a vehicle which alleviate at least some of the above mentioned drawbacks, in particular enabling the method for a forward-looking vehicle sensor having a field of view that falls below 180°. It is also an object of the present disclosure to provide corresponding control units, computer program products and vehicles.

This object is obtained by a vehicle sensor system comprising a vehicle sensor and a sensor data processing system that is arranged to control operation of the vehicle sensor, and to obtain data from the vehicle sensor. The sensor data processing system is adapted to obtain a sequence of detections associated with a target object and to align the detections along a common line. The sensor data processing system is further adapted to estimate an error angle between the common line and the movement direction, and to calibrate the angle measurement based on the estimated error angle.

This means that all detections can be taken into account, and that relatively large error angles can be determined, not needing ground truth values determined based on a minimum detected distance from the vehicle to a target object. This in turn means that a forward-looking vehicle sensor having a field of view that falls below 180° can be used when estimating the error angle and enabling calibration of the angle measurement based on the estimated error angle.

The error angle can be determine relatively fast, the principle according to the present disclosure fits a linear line-model through evaluated points over time.

A general mounting offset can be evaluated over the whole field of view.

According to some aspects, the sensor data processing system is adapted to obtain the sequence of detections when the vehicle is driving along a straight line.

According to some aspects, the sensor data processing system is adapted to obtain the sequence of detections when the vehicle is driving along a line having a curvature, and to backtrack vehicle motion. The sensor data processing system is further adapted to determine a compensation for said curvature based on the backtracked vehicle motion, and to align the detections along the common line in dependence of said compensation.

This means that the sequence of detections can be acquired irrespective of the vehicle's path of travel.

According to some aspects, the sensor data processing system is adapted to obtain detections when the vehicle enters a pre-determined calibration area.

This means that the sequence of detections can be acquired in a controlled manner, for example at a factory. This in turn means that the error angle and can be determined and calibrated for very quickly, where a shorter distance than normal road drive is sufficient.

According to some aspects, the the vehicle sensor comprises any of a Lidar, Light Detection and Ranging, sensor, a radar sensor, a camera sensor, or an ultrasonic sensor.

This means that the present disclosure is applicable for a variety of sensor types.

According to some aspects, the the target object relates to a stationary detection, a detection linked and associated with a moving target object, or a detection provided by means of radar signal processing, via comparing measured raw azimuth angle and measured azimuth angle.

This means that many types of target objects can be used.

There are also disclosed herein methods and vehicles, associated with the above-mentioned advantages.

BRIEF DESCRIPTION OF THE DRAWINGS

The present disclosure will now be described in more detail with reference to the appended drawings, where:

> Figure 1 illustrates a vehicle with a sensor system;
> Figure 2 is a graph showing example sensor detections;
> Figure 3 is a flow chart illustrating methods;
> Figures 4-5 show example sensor data processing systems; and
> Figure 6 shows an example computer program product.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

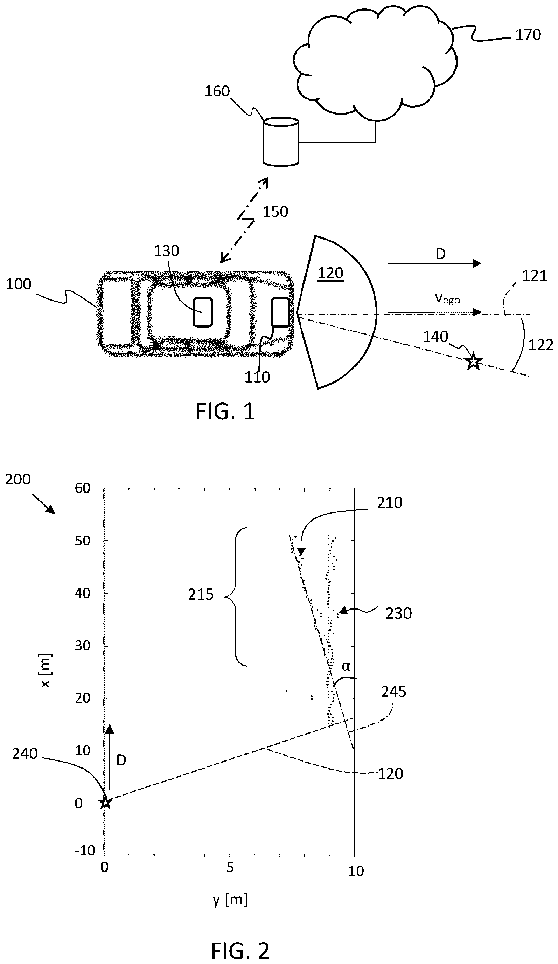

Figure 1 shows a vehicle 100 equipped with a vehicle sensor system 110, 130. The vehicle moves in a movement direction D with velocity vector $v_{ego}$. The vehicle sensor system comprises a vehicle sensor 110 and a sensor data processing system 130. An optional storage module may also be comprised in the vehicle sensor system. The storage module may store map data comprising information about a surrounding environment of the vehicle 100. The storage module will be discussed in more detail below.

The sensor data processing system is arranged to control operation of the vehicle sensor 110, and to obtain data from the vehicle sensor 110, such as detections or data points corresponding to target objects 140 in vicinity of the vehicle 100.

The vehicle sensor 110 may comprise a single sensor unit or a plurality of sensor units, potentially of different type and/or of different configuration. For instance, the vehicle sensor 110 may comprise any of a Lidar (Light Detection and Ranging) sensor, a radar sensor, a camera sensor, or an ultrasonic sensor. The vehicle sensor 110 may also comprise any of a TOF camera system, a structured light system, and a stereo vision system. The focus on the present disclosure will be on radar type sensors, but the techniques are also applicable to other types of sensors, in particular to Lidar sensors.

This means that the present disclosure as described below is applicable for a variety of sensor types.

According to an example, the vehicle sensor 110 is arranged to generate a number of data points comprising coordinates in a relative coordinate system, i.e., relative to the location and orientation of the vehicle sensor 110. The coordinates may be Cartesian coordinates, or they may be polar coordinates. The vehicle sensor 110 may also be arranged to generate raw data, or a more refined feature vector extracted from the sensor data. The data points may also comprise additional information, such as signal strength values or measures of signal-to-noise ratio (SNR).

One or more timestamps may also be associated with the information passing between the vehicle sensor 110 and the sensor data processing system 130.

The time stamps may be assigned per data point or be common to a set of data points.

The vehicle sensor system 110,130 may be connected via wireless link 150 to a remote server 160, which in turn may be comprised in a remote network 170.

The vehicle sensor 110 is associated with a field of view 120. In case the vehicle sensor 110 is a front radar transceiver, a boresight direction 121 of the sensor 110 often coincides with a centre line of the field of view 120. In case the vehicle sensor is instead configured as a side sensor, then the boresight direction may point in some other angle compared to the direction of the vehicle 100.

Some radar transceivers comprise antenna arrays which enable estimating not only distance to an object but also a bearing, i.e., an angle 122 measured from the sensor boresight direction 121 to the detected target object 140.

As mentioned above, such estimates of angle are often associated with relatively large error. Figure 2 shows an example of radar transceiver measurement data 200. The present location of the radar transceiver 110 at a certain moment is marked by a star 240 at coordinates (0,0). A sequence of detections 210 have previously been made with respect to a target object 140, that can be stationary, in vicinity of the radar transceiver. Here, the vehicle 100 has been driving along a straight line, i.e., along the x-axis in Figure 2. However, due to calibration error, there is a spread in estimates of bearing to the detected object, which shows up as some deviation in the upper part 215 of the graph 200. It is desired to compensate for this error by calibrating the radar transceiver 110.

This means that the sensor data processing system 130 is adapted to obtain a sequence of detections 210 associated with a target object 140.

According to the present disclosure, the sensor data processing system 130 is adapted to align the detections 210 along a common line 245 and to estimate an error angle $\alpha$ between the common line 245 and the movement direction D.

The sensor data processing system 130 is further adapted to correct the radar transceiver data and thus calibrate the radar angle measurement based on the estimated error angle $\alpha$. The corrected values 230 are indicated in Figure 2, and it is noted that the error has been reduced significantly.

This means that all detections can be taken into account, and that relatively large error angles can be determined, not needing ground truth values determined based on a minimum detected distance from the vehicle to a target object. This in turn means that a forward-looking vehicle sensor having a field of view that falls below 180° can be used when estimating the error angle and enabling calibration of the angle measurement based on the estimated error angle.

The error angle $\alpha$ can be determine relatively fast, for example the principle according to the present disclosure fits a linear line-model through evaluated points over time.

A general mounting offset can be evaluated over the whole field of view.

The detections 210 have been acquired during a certain traveling distance until reaching the present location 240 of the radar transceiver 110, and in the case the vehicle 100 has been driving along a straight line, the procedure according to the present disclosure is straight-forward. In this case, according to some aspects, the sensor data processing system 130 is adapted to obtain the sequence of detections 210 when the vehicle 100 is driving along a straight line.

However, if the vehicle has been following some other path, then this path will be reflected in detections 210. For instance, a vehicle that has been executing a turn before reaching the present location 240 with a curvature will need to be compensated for. This can for example be handled by the sensor data processing system 130 backtracking the vehicle motion based on, e.g., the vehicle turning rate or yaw rate, and potentially also based on vehicle velocity, resulting in a compensation for said curvature. The detections 210 can then be aligned along the common line 245 in dependence of said compensation.

In this case, according to some aspects, the sensor data processing system 130 is adapted to obtain the sequence of detections 210 when the vehicle 100 is driving along a line having a curvature, and to backtrack vehicle motion. The sensor data processing system 130 is further adapted to determine a compensation for said curvature based on the backtracked vehicle motion, and to align the detections 210 along the common line 245 in dependence of said compensation.

According to some aspects, the sensor samples are obtained regularly spaced in time, not regularly spaced geometrically. In this case the distance between ground truth values may need to be varied as function of vehicle velocity up to the point in time when the smallest distance was detected.

According to some aspects, it is assumed that the reflection point is not changing over time, meaning it can be observed and identified.

According to some aspects, the vehicle 100 is operated to run straight in a test track, for example in the factory after production. Artificial target objects can be created by metal poles and/or corner reflectors. This means that, according to some aspects, the sensor data processing system 130 is adapted to obtain detections when the vehicle 100 enters a pre-determined calibration area. This enables acquiring the detections in a controlled manner. This in turn means that the error angle and can be determined and calibrated for very quickly, where a shorter distance than normal road drive is sufficient.

Based on radar signal processing, the most promising or strongest reflection points are found and a target can be obtained based on range, Doppler and bearing information.

As an example, the vehicle sensor 110 starts to observe a reflection point corresponding to a target object 140 far away, approximately at boresight 121 in the movement direction D. This point gets saved in a memory comprised in the sensor data processing system 130 and every radar processing cycle the very same target object, or reflection point, 140 gets detected just a bit closer due to vehicle movement.

In this manner a "string" of saved points, forming a sequence of detections 210 associated with a target object 140 is provided.

In accordance with the present disclosure, it is determined where the reflection point 140 should have been if the sequence of detections 210 would have been positioned in the movement direction D.

According to some aspects, the angle error values for multiple strings, forming sequences of detections 210, are later on filtered and can be applied on bearing measurements.

By means of the present disclosure, all detections 210 are taken into account, also detections related to moving target objects. The present disclosure is especially suited for defined scenarios, such as for example an end of line test track, since no radar signal processing (RSP)-stationary-classification is used. Relatively large errors can be detected without the need for a certain sensor coverage.

Regarding moving target objects, it is here referred to two kinds of moving target objects:

- A detection linked and associated with a moving target object, such as for example a moving corner reflector.
- A detection provided by means of RSP, via comparing measured raw azimuth angle and measured azimuth angle, i.e. Doppler speed vs host speed.

Both these types of moving target objects are applicable for the present disclosure. In particular detections linked and associated with a moving target object, generated on "real-moving-target objects", can be used as long their movement is controlled and known while the vehicle driving path and reflection point are not changing.

According to some aspects, the the target object 140 relates to a stationary detection, a detection linked and associated with a moving target object, or a detection provided by means of radar signal processing, via comparing measured raw azimuth angle and measured azimuth angle.

This means that many types of target objects can be used.

According to some aspects, the present disclosure uses principal-component-analysis to obtain slope and intercept of line model multiple times. A linear line-model can be fitted through evaluated points over time.

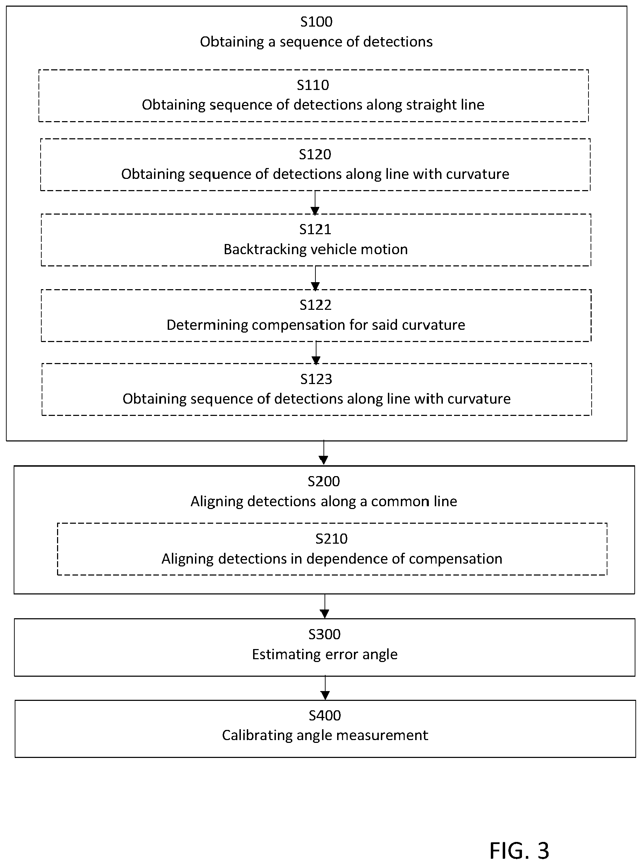

With reference to Figure 3, the present disclosure also relates to a method for calibrating an angle measurement 122 of a vehicle sensor 110 in a vehicle 100 travelling in a movement direction D. The method comprises obtaining S100 a sequence of detections 210 associated with a target object 140, and aligning S200 the detections 210 along a common line 245 The method further comprises estimating S300 an error angle $\alpha$ between the common line 245 and the movement direction D, and calibrating S400 the angle measurement 122 based on the estimated error angle $\alpha$.

According to some aspects, the obtaining S100 comprises obtaining S110 the sequence of detections 210 when the vehicle 100 is driving along a straight line.

According to some aspects, the obtaining S100 comprises obtaining S120 the sequence of detections 210 when the vehicle 100 is driving along a line having a curvature, backtracking S121 vehicle motion, and determining S122 a compensation for said curvature based on the backtracked vehicle motion. Furthermore, the aligning S200 comprises aligning S210 the detections 210 along the common line 245 in dependence of said compensation.

According to some aspects, the obtaining comprises obtaining S13 detections when the vehicle 100 enters a pre-determined calibration area.

According to some aspects, vehicle sensor 110 comprises any of a Lidar, Light Detection and Ranging, sensor, a radar sensor, a camera sensor, or an ultrasonic sensor.

According to some aspects, the the target object 140 relates to a stationary detection, a detection linked and associated with a moving target object, or a detection provided by means of radar signal processing, via comparing measured raw azimuth angle and measured azimuth angle.

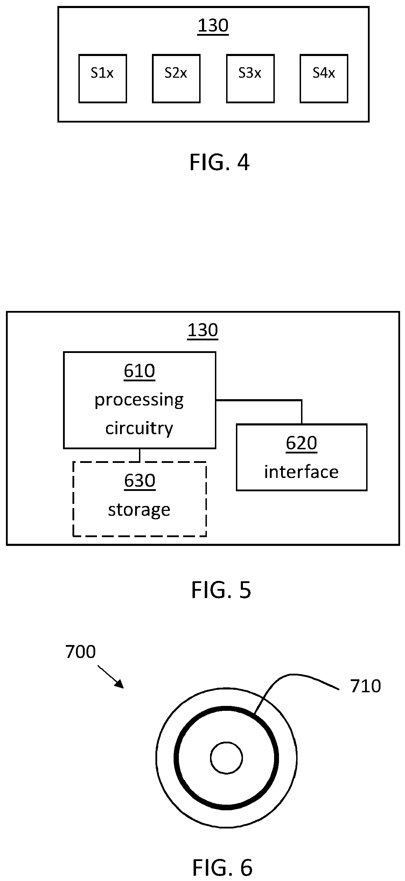

Figure 4 schematically illustrates a sensor data processing system 130 for calibrating an angle measurement 122 of a vehicle sensor 110 in a vehicle 100. The sensor data processing system 130 comprises an obtaining unit S1x configured to obtain a sequence of detections 210 associated with a target object 140 and an aligning unit S2x configured to align the detections 210 along a common line 245. The control unit further comprises n estimating unit S3x configured to estimate an error angle $\alpha$ between the common line 245 and the movement direction D, and a calibration unit Sx4 configured to calibrate the angle measurement 122 based on the estimated error angle $\alpha$.

Figure 5 schematically illustrates, in terms of a number of functional units, the components of a sensor data processing system 130 according to an embodiment of the discussions herein. Processing circuitry 610 is provided using any combination of one or more of a suitable central processing unit CPU, multiprocessor, microcontroller, digital signal processor DSP, etc., capable of executing software instructions stored in a computer program product, e.g. in the form of a storage medium 630. The processing circuitry 610 may further be provided as at least one application specific integrated circuit ASIC, or field programmable gate array FPGA. The processing circuitry thus comprises a plurality of digital logic components.

Particularly, the processing circuitry 610 is configured to cause the sensor data processing system 130 to perform a set of operations, or steps. For example, the storage medium 630 may store the set of operations, and the processing circuitry 610 may be configured to retrieve the set of operations from the storage medium 630 to cause the sensor data processing system 130 to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The sensor signal processing system 130 further comprises an interface 620 for communications with at least one external device, according to some aspects at least with the vehicle sensor 110. As such the interface 620 may comprise one or more transmitters and receivers, comprising analogue and digital components and a suitable number of ports for wireline communication.

The processing circuitry 610 controls the general operation of the sensor data processing system 130, e.g. by sending data and control signals to the interface 620 and the storage medium 630, by receiving data and reports from the interface 620, and by retrieving data and instructions from the storage medium 630. Other components, as well as the related functionality, of the control node are omitted in order not to obscure the concepts presented herein.

Figure 6 shows a computer program product 700 comprising computer executable instructions 710 to execute any of the methods disclosed herein.

The present disclosure is not limited to the above, but may vary freely within the scope of the appended claims. For example, as mentioned previously, the vehicle sensor 110 may comprise a single sensor unit or a plurality of sensor units, of any suitable type or types. The sensor unit or sensor unit can have any suitable mounting configuration such as for example forward-looking, rear-ward looking, corner-mounted and/or side-mounted.

According to some aspects, the sensor data processing system 130 can be constituted by one or more control units that can be integrated or distributed.

**Claims**

1. A method for calibrating an angle measurement (122) of a vehicle sensor (110) in a vehicle (100) travelling in a movement direction (D), the method comprising

   obtaining (S100) a sequence of detections (210) associated with a target object (140);
   aligning (S200) the detections (210) along a common line (245);
   estimating (S300) an error angle ($\alpha$) between the common line (245) and the movement direction (D); and
   calibrating (S400) the angle measurement (122) based on the estimated error angle ($\alpha$).

2. The method according to claim 1, wherein the obtaining comprises obtaining (S110) the sequence of detections (210) when the vehicle (100) is driving along a straight line.

3. The method according to any one of the claims 1 or 2, wherein the obtaining (S100) comprises

   obtaining (S120) the sequence of detections (210) when the vehicle (100) is driving along a line having a curvature;
   backtracking (S121) vehicle motion; and
   determining (S122) a compensation for said curvature based on the backtracked vehicle motion; and where the aligning (S200) comprises aligning (S210) the detections (210) along the common line (245) in dependence of said compensation.

4. The method according to any previous claim, wherein the obtaining comprises obtaining (S13) detections when the vehicle (100) enters a pre-determined calibration area.

5. The method according to any previous claim, wherein the the vehicle sensor (110) comprises any of a Lidar, Light Detection and Ranging, sensor, a radar sensor, a camera sensor, or an ultrasonic sensor.

6. The method according to any previous claim, wherein the the target object (140) relates to a stationary detection, a detection linked and associated with a moving target object, or a detection provided by means of radar signal processing, via comparing measured raw azimuth angle and measured azimuth angle.

7. A vehicle sensor system (110, 130) comprising a vehicle sensor (110) and a sensor data processing system (130) that is arranged to control operation of the vehicle sensor (110), and to obtain data from the vehicle sensor (110), where the sensor data processing system (130) is adapted to

   - obtain a sequence of detections (210) associated with a target object (140),
   - align the detections (210) along a common line (245),

- estimate an error angle ($\alpha$) between the common line (245) and the movement direction (D), and to
- calibrate the angle measurement (122) based on the estimated error angle ($\alpha$).

8. The vehicle sensor system (110, 130) according to claim 7, wherein the sensor data processing system (130) is adapted to obtain the sequence of detections (210) when the vehicle (100) is driving along a straight line.

9. The vehicle sensor system (110, 130) according to any one of the claims 7 or 8, wherein the sensor data processing system (130) is adapted to

- obtain the sequence of detections (210) when the vehicle (100) is driving along a line having a curvature,
- backtrack vehicle motion,
- determine a compensation for said curvature based on the backtracked vehicle motion, and to
- align the detections (210) along the common line (245) in dependence of said compensation.

10. The vehicle sensor system (110, 130) according to any one of the claims 7-9, wherein the sensor data processing system (130) is adapted to obtain detections when the vehicle (100) enters a pre-determined calibration area.

11. The vehicle sensor system (110, 130) according to any one of the claims 7-10, wherein the the vehicle sensor (110) comprises any of a Lidar, Light Detection and Ranging, sensor, a radar sensor, a camera sensor, or an ultrasonic sensor.

12. The vehicle sensor system (110, 130) according to any one of the claims 7-11, wherein the the target object (140) relates to a stationary detection, a detection linked and associated with a moving target object, or a detection provided by means of radar signal processing, via comparing measured raw azimuth angle and measured azimuth angle.

13. A vehicle comprising the vehicle sensor system (110, 130) according to any one of the claims 7-12.

FIG. 1

FIG. 2

**S100**
Obtaining a sequence of detections

> **S110**
> Obtaining sequence of detections along straight line

> **S120**
> Obtaining sequence of detections along line with curvature

> **S121**
> Backtracking vehicle motion

> **S122**
> Determining compensation for said curvature

> **S123**
> Obtaining sequence of detections along line with curvature

**S200**
Aligning detections along a common line

> **S210**
> Aligning detections in dependence of compensation

**S300**
Estimating error angle

**S400**
Calibrating angle measurement

FIG. 3

130

S1x    S2x    S3x    S4x

FIG. 4

130

610
processing
circuitry

630
storage

620
interface

FIG. 5

700

710

FIG. 6

Europäisches
Patentamt

European
Patent Office

Office européen
des brevets

# EUROPEAN SEARCH REPORT

**Application Number**

EP 22 16 5067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 025 797 A (KAWAI NOBUHARU [JP] ET AL) 15 February 2000 (2000-02-15) * column 2, line 5 – line 40 * * column 9, line 15 – line 34 * * column 10, line 30 – column 11, line 26 * * column 12, line 11 – line 37 * * column 14, line 59 – column 15, line 18 * * figures 1-17 * | 1-13 | INV. G01S7/40 G01S13/44 G01S13/72 G01S13/931 G01S15/931 G01S15/66 G01S15/42 G01S17/66 G01S17/931 G01S17/42 |
| X | WO 2018/217708 A1 (VEONEER US INC [US]) 29 November 2018 (2018-11-29) | 1,2,4-8, 10-13 | G01S7/497 G01S7/52 |
| A | * page 1, line 10 – line 12 * * page 7, line 2 – page 9, line 10 * * page 12, line 28 – page 13, line 7 * * figures 1-9 * | 3,9 | ADD. G01S13/34 G01S13/58 |

TECHNICAL FIELDS
SEARCHED        (IPC)

G01S

The present search report has been drawn up for all claims

| Place of search | Date of completion of the search | Examiner |
|---|---|---|
| Munich | 30 August 2022 | Köppe, Maro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

EP 4 253 994 A1

## ANNEX TO THE EUROPEAN SEARCH REPORT
## ON EUROPEAN PATENT APPLICATION NO.

EP 22 16 5067

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2022

| Patent document cited in search report | | Publication date | Patent family member(s) | | Publication date |
|---|---|---|---|---|---|
| US 6025797 | A | 15-02-2000 | DE | 19833065 A1 | 28-01-1999 |
| | | | US | 6025797 A | 15-02-2000 |
| WO 2018217708 | A1 | 29-11-2018 | EP | 3631501 A1 | 08-04-2020 |
| | | | US | 2018341007 A1 | 29-11-2018 |
| | | | WO | 2018217708 A1 | 29-11-2018 |

**EP 4 253 994 A1**

**Patent documents cited in the description**

- EP 3761054 A